# EUROPEAN PATENT APPLICATION

(11) **EP 4 586 611 A1**
(43) Date of publication of application: **16.07.2025**
(21) Application number: 24151509.7
(22) Date of filing: 12.01.2024
(51) Int. Cl.: H04N 19/597, H04N 13/111, H04N 13/161, H04N 19/70

(54) **ENCODING AND DECODING IMMERSIVE VIDEO**

(71) Applicant: Koninklijke Philips N.V., 5656 AG Eindhoven (NL)
(72) Inventor: VAREKAMP, Christiaan, 5656 AG Eindhoven (NL); KROON, Bart, 5656 AG Eindhoven (NL); VAN GEEST, Bartholomeus Wilhelmus Damianus, 5656 AG Eindhoven (NL)
(74) Representative: Philips Intellectual Property & Standards

(57) **Abstract**

A bitstream, an encoder and method for encoding the bitstream, and a decoder and method for decoding the bitstream. The bitstream comprises encoded texture and depth patches of video data, and encoded neural regions that include depth information and are associated with one or more implicit neural visual representations defined in metadata of the bitstream. The one or more implicit neural visual representations have been trained using the neural regions.

## Description

### FIELD OF THE INVENTION

The invention relates to the field of immersive video.

### BACKGROUND OF THE INVENTION

Six degree of freedom (6 DoF) immersive video allows a scene to be viewed from different positions and orientations. The creation of 6 DoF immersive video typically uses multiple cameras to acquire image frames of a scene from different viewpoints. The acquired image frames are used to generate an image frame at a new viewpoint. Various approaches are used for the synthesis of an image frame at a new viewpoint.

For instance, information from the acquired image frames of the scene may be encoded in an atlas-based format. In this approach, texture patches (i.e. regions of the acquired image frames) and depth patches (i.e. regions of depth maps for the acquired image frames) are packed into one or more atlases. The one or more atlases are then encoded, along with metadata associated with the patches.

The use of an atlas-based format enables a novel view to be rendered efficiently. However, images rendered using an atlas-based format tend to lack quality in regions having fine geometry, non-Lambertian reflecting surfaces and/or transparent objects.

A newer approach for generating an image at a new viewpoint involves the use of a neural network to model the scene. For instance, a neural radiance field (NeRF) model outputs a color and density of a point in the 3D scene emitting light in a particular direction based on an input of the 3D coordinates of the point and the direction of light. The color of a pixel in an image at a new viewpoint is determined by using the NeRF model to provide the color and density for several points along a ray linking the pixel to the new viewpoint, and integrating the colors of these points, weighted by density.

A NeRF model can produce high-quality views of scenes including fine geometry, non-Lambertian reflecting surfaces and/or transparent objects. However, the NeRF model must be trained using the acquired images of the scene: this can take up to several hours on powerful GPUs. Rendering an image using a NeRF model also takes much longer than using a traditional atlas-based format.

### SUMMARY OF THE INVENTION

The invention is defined by the claims.

According to examples in accordance with an aspect of the invention, there is provided a bitstream comprising: one or more encoded atlases, wherein the one or more encoded atlases include a plurality of texture patches of video data comprising a plurality of views of a scene, a plurality of depth patches for the video data and a plurality of neural regions for the video data, wherein each neural region includes depth information; and encoded metadata, wherein the metadata includes coefficients of one or more implicit neural visual representations trained using at least a subset of the neural regions.

In other words, the implicit neural visual representation(s) defined in the bitstream are not trained on all video data of the scene, but only particular regions, which are represented by the neural regions in the bitstream. By training the implicit neural visual representation(s) only for particular regions, training time and rendering (consisting of network inference for certain patches) time of the implicit neural visual representation(s) is reduced. This therefore allows immersive video to be encoded more efficiently than existing NeRF-based approaches, while still enabling certain regions of the source views to benefit from the improved quality provided by implicit neural visual representations.

The neural regions may, for example, correspond to regions having fine geometry, non-Lambertian reflecting surfaces and/or transparent objects. These are regions for which the use of an implicit neural visual representation is particularly advantageous.

Training one or more implicit neural visual representations using at least a subset of the neural regions may comprise training the one or more implicit neural visual representations to encode visual information in the neural regions themselves (where the neural regions are patches of video data) or visual information in the regions of video data represented by the neural regions (where other representations are used as the neural regions).

In some examples, the metadata further includes an indication of a maximum number of neural rays, for a given viewport resolution, to be computed when rendering an image frame of the scene using the bitstream.

A renderer may check this indication and only render an image frame of the scene if the renderer is able to compute the maximum number of neural rays.

The indication of the maximum number of neural rays may, for instance, comprise a maximum cumulative solid angle of all neural regions combined when observed from one or more reference positions (e.g. a center of the scene or a cardinal position of one or more of the views in the video data), or a maximum fraction of viewport pixels for one or more reference viewports.

The metadata may further include an indication of a total maximum number of neural network evaluations for a given viewport resolution.

In some examples, the metadata further comprises viewing space information defining a viewing space for which the indication of a maximum number of neural rays applies.

In some examples, the one or more implicit neural visual representations comprise a plurality of implicit neural visual representations; and at least a portion of the coefficients in the metadata is shared between more than one implicit neural visual representation.

This allows the bit rate of the bitstream, and therefore the cost of transmitting the bitstream, to be reduced.

In some examples, the plurality of texture patches and plurality of depth patches represent all regions of the scene represented in the video data; and the one or more implicit neural visual representations defined in the metadata have been trained to model view-dependent effects for regions of the scene represented by the plurality of neural regions.

In other words, the one or more implicit neural visual representations may provide a residual defining a difference from a base texture of the scene.

According to examples in accordance with another aspect of the invention, there is provided a method for encoding immersive video, the method comprising: obtaining video data comprising a plurality of views of a scene; processing the video data to generate one or more atlases, wherein the one or more atlases include a plurality of texture patches, a plurality of depth patches and a plurality of neural regions, wherein each neural region includes depth information; obtaining one or more implicit neural visual representations, wherein each of the one or more implicit neural visual representations has been trained using at least a subset of the neural regions; generating metadata associated with the one or more atlases, wherein the metadata includes coefficients of the one or more implicit neural visual representations; and encoding the one or more atlases and the metadata into a bitstream.

There is also provided a method for decoding immersive video, the method comprising: receiving a bitstream comprising: one or more encoded atlases, wherein the one or more encoded atlases include a plurality of texture patches of video data comprising a plurality of views of a scene, a plurality of depth patches for the video data and a plurality of neural regions for the video data, wherein each neural region includes depth information; and encoded metadata, wherein the metadata includes coefficients of one or more implicit neural visual representations trained using at least a subset of the neural regions; decoding the one or more atlases and the metadata; processing the plurality of texture patches and the plurality of depth patches to determine a pixel value for each pixel in one or more first regions of an image frame at a target viewpoint; processing the depth information for each neural region to define a position of one or more second regions in the image frame; and using the one or more implicit neural visual representations defined in the metadata to determine a pixel value for at least a subset of pixels in the one or more second regions.

Using the one or more implicit neural visual representations to render only some pixels in the image frame at the target view points allows the image frame to be rendered in less time.

In some examples, the one or more first regions and the one or more second regions may overlap.

In some examples, the one or more implicit neural visual representations defined in the metadata comprise one or more neural volume rendering models; and the step of using the one or more implicit neural visual representations defined in the metadata to determine a pixel value for at least a subset of pixels in the one or more second regions comprises: processing the depth information for the plurality of neural regions to define a set of sampling points for each pixel; using the one or more neural volume rendering models to generate a color and density for each sampling point; and for each pixel, processing the color and density for each sampling point in the set of sampling points for the pixel to determine the pixel value for the pixel.

In other words, the depth information is used to identify suitable sampling points for a pixel. This further reduces a rendering time for the image frame, and may additionally improve the quality of the image frame.

In some examples, the method further comprises determining a region depth for each of the one or more first regions and each of the one or more second regions; and the pixel values of the pixels are determined in order of region depth, from smallest depth to greatest depth.

In this way, the trained implicit neural visual representations may be used only for pixels that are at least partially visible from the target view point.

In some examples, the step of processing the plurality of texture patches and the plurality of depth patches to determine a pixel value for each pixel in one or more first regions is performed prior to using the one or more implicit neural visual representations, and the one or more implicit neural visual representations are used only to determine the pixel value for any pixels in the one or more second regions that do not overlap with a first region.

In some examples, the pixel values for pixels in the one or more first regions and the pixel values for pixels in the one or more second regions are determined independently from one another; and the method further comprises, for each pixel belonging to both a first region and a second region, processing the determined pixel values for the pixel to generate a final pixel value.

In some examples, the method further comprises blending at one or more boundaries between a first region and a second region.

This reduces a difference in appearance between regions of the image frame that have been rendered using different methods.

There is also provided a computer program product comprising computer program code means which, when executed on a computing device having a processing system, cause the processing system to perform all of the steps of any of the methods described above.

According to examples in accordance with another aspect of the invention, there is provided an encoder configured to encode immersive video, the encoder being configured to: obtain video data comprising a plurality of views of a scene; process the video data to generate one or more atlases, wherein the one or more atlases include a plurality of texture patches, a plurality of depth patches and a plurality of neural regions, wherein each neural region includes depth information; obtaining one or more implicit neural visual representations, wherein each of the one or more implicit neural visual representations has been trained using at least a subset of the neural regions; generate metadata associated with the one or more atlases, wherein the metadata includes coefficients of the one or more implicit neural visual representations; and encode the one or more atlases and the metadata into a bitstream.

There is also provided a decoder configured to decode immersive video, the decoder being configured to: receive a bitstream comprising: one or more encoded atlases, wherein the one or more encoded atlases include a plurality of texture patches of video data comprising a plurality of views of a scene, a plurality of depth patches for the video data and a plurality of neural regions for the video data, wherein each neural region includes depth information; and encoded metadata, wherein the metadata includes coefficients of one or more implicit neural visual representations trained using at least a subset of the neural regions; decode the one or more atlases and the metadata; process the plurality of texture patches and the plurality of depth patches to determine a pixel value for each pixel in one or more first regions of an image frame at a target viewpoint; process the depth information for each neural region to define a position of one or more second regions in the image frame; and use the one or more implicit neural visual representations defined in the metadata to determine a pixel value for at least a subset of pixels in the one or more second regions.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates an immersive video system, according to an embodiment of the invention;
Fig. 2 illustrates an immersive video system, according to an embodiment of the invention;
Fig. 3 illustrates an example of two source view frames of a scene;
Fig. 4 illustrates a partially-filled atlas generated based on the source view frames of Fig. 3;
Fig. 5 illustrates a method for decoding immersive video, according to an embodiment of the invention; and
Fig. 6 illustrates an image frame in which the scene illustrated in the source view frames of Fig. 3 is being rendered.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bitstream, an encoder and method for encoding the bitstream, and a decoder and method for decoding the bitstream. The bitstream comprises encoded texture and depth patches of video data, and encoded neural regions that include depth information and are associated with one or more implicit neural visual representations defined in metadata of the bitstream. The one or more implicit neural visual representations have been trained using the neural regions.

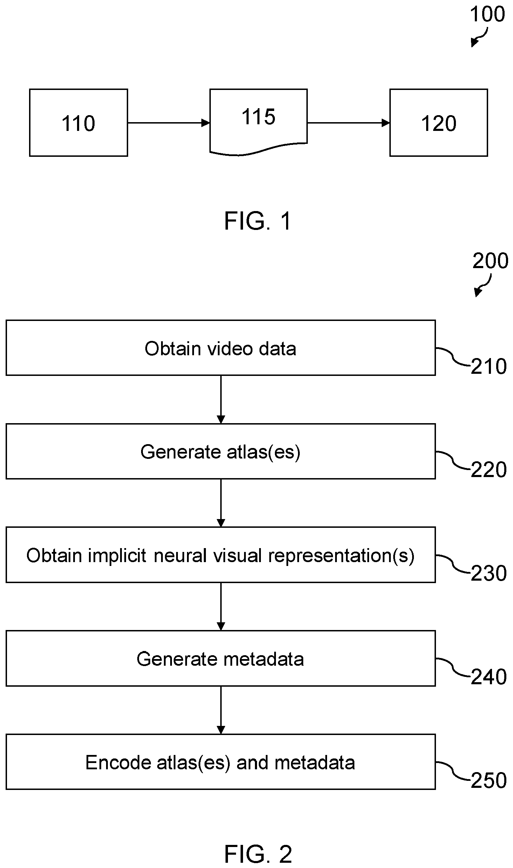

Fig. 1 illustrates an immersive video system 100, according to an embodiment of the invention. The immersive video system comprises an encoder 110 and a decoder 120. The encoder is configured to output a bitstream 115, which is received by the decoder. In Fig. 1, the bitstream 115 is transmitted directly from the encoder to the decoder; however, as the skilled person will readily appreciate, the bitstream may alternatively be stored on a suitable storage medium before being transmitted to the decoder. The bitstream 115 is, itself, an embodiment of the invention. The bitstream comprises one or more encoded atlases and encoded metadata.

In the context of the present disclosure, an atlas is a multi-view frame of immersive video data. The one or more encoded atlases of the bitstream 115 include a plurality of texture patches of video data comprising a plurality of views of a scene, a plurality of depth patches for the video data and a plurality of neural regions for the video data. The plurality of texture patches, plurality of depth patches and plurality of neural regions together represent the entire scene captured in the video data.

Various alternatives are envisaged for arranging the plurality of texture patches, plurality of depth patches and plurality of neural regions in the one or more atlases. For instance, a single atlas may contain texture patches, depth patches and neural regions, and the metadata may comprise an indication of the positions of the texture patches, depth patches and neural regions. In some examples, a single atlas containing texture patches, depth patches and neural regions may be divided into subregions (e.g. tiles), such that each subregion contains only one or more texture patches, only one or more depth patches or only one or more neural regions, and the metadata may comprise an indication of which subregions(s) contain texture patches, which contain depth patches and which contain neural regions. Alternatively, separate atlases may be used for the texture patches, the depth patches and the neural regions (i.e. each atlas may contain only texture patches, only depth patches or only neural regions), and the metadata may comprise an indication of which atlas(es) contain texture patches, which contain depth patches and which contain neural regions.

The texture patches included in the one or more encoded atlases are regions within the one or more atlases that contain texture information (e.g. color) for regions of the scene captured by the video data. The texture patches may comprise video frames and/or regions of video frames of the video data.

The depth patches (also known as geometry patches) included in the one or more encoded atlases contain depth information for regions of the scene. Each depth patch may correspond to a texture patch included in the one or more encoded atlas (e.g. the depth patches may be depth maps for video frames and regions of video frames encoded in the one or more atlases as texture patches).

The neural regions included in the one or more encoded atlases are regions that are associated in the metadata of the bitstream 115 with information relating to an implicit neural visual representation, as described in more detail below. In other words, each neural region defines a region of the scene for which an implicit neural visual representation has been trained. Each neural region may represent a region of the scene having fine geometry, a transparent surface and/or a surface having non-Lambertian reflective properties. The selection of neural regions from video data is described in more detail below.

Each neural region includes depth information for the region of the scene represented by the neural region. Any suitable representation of depth information may be used for the neural regions; for instance, the plurality of neural regions may comprise patches of geometry video data, patches with a constant depth value, meshes, or descriptions of volumetric regions (e.g. using solid constructive geometry). In some examples, full depth information for each neural region may be provided only for a subset of video frames of the video data (i.e. reference frames), and for other frames, information defining any differences from a reference frame may be provided for each neural region.

The encoded metadata includes coefficients of one or more implicit neural visual representations that have each been trained using at least a subset of the neural regions, such that the encoded metadata provides coefficients for each of the plurality of neural regions. For instance, the encoded metadata may include coefficients of a single implicit neural representation that has been trained using the plurality of neural regions, or coefficients of multiple implicit neural visual representations, each trained using a different subset of the neural regions (such that each neural region is used to train one of the implicit neural visual representations). The training of the one or more implicit neural visual representations is described in more detail below.

An implicit neural visual representation is a neural network in which three-dimensional visual information for an object or scene is encoded. Typically, during training, an implicit neural visual representation learns, using ground truth views of a scene, the relationship between the 3D co-ordinates (and, in some cases, viewing direction) of a point or ray in the scene and an output for the point or ray (e.g. color, occupancy, etc.).

The one or more implicit neural visual representations for which the coefficients are included in the encoded metadata of the bitstream 115 may, for example, comprise one or more neural radiance field models, one or more occupancy networks, or one or more neural signed distance functions.

In some examples, the encoded metadata may additionally include information defining an architecture of each of the one or more implicit neural visual representations; alternatively, the architecture of each of the one or more implicit neural visual representations may be provided to a decoder receiving the bitstream 115 by external means.

As the skilled person will readily appreciate, the metadata encoded in the bitstream 115 may additionally include any other information required for synthesizing a view of the scene from a target viewpoint. For instance, the encoded metadata may include information defining the position and/or orientation of each of the cameras used to obtain the video data of the scene, and information defining the position and source view of each texture patch, depth patch and neural region in the one or more encoded atlases.

In some examples, the encoded metadata in the bitstream may further include an indication of a maximum number of neural rays, for a given viewport resolution, to be computed when rendering an image frame of the scene using the bitstream. For instance, the indication may be a profile-tier-level indictor. The use of this indication by a decoder is described below.

The indication of the maximum number of neural rays may, for example, be expressed as a maximum cumulative solid angle of all neural regions when observed from one or more reference positions. The one or more reference positions may, for instance, comprise a center of the scene or the cardinal points of each view included in the video data. In another example, the indication of the maximum number of neural rays may be expressed as a fraction of viewport pixels for one or more reference viewports. The one or more reference viewports may, for instance, comprise the viewport(s) determined by the views included in the video data (in particular, by view parameters of views included in the video data, such as the projection plane size).

In some examples, the encoded metadata may additionally or alternatively include an indication of a maximum total number of evaluations to be performed by the one or more implicit neural visual representations, for a given viewport resolution.

In some examples, the metadata may further include viewing space information defining a viewing space for which the indication of a maximum number of neural rays and/or the indication of a maximum total number of evaluations (as appropriate) applies. The viewing space information may, for example, define a target viewpoint or range of target viewpoints (i.e. a volume of 3D space in which the target viewpoints may be) for which the indication(s) apply. The use of the viewing space information by a decoder is described below.

In some examples, where the one or more implicit neural visual representations comprise a plurality of implicit neural visual representations, any information defining the implicit neural visual representations that is shared between the implicit neural visual representations (e.g. coefficients, layers and/or, if included in the bitstream, the architecture of the implicit neural visual representations) may be included only once in the bitstream. Each coefficient (and/or, where included, architecture) may be accompanied by an indication identifying which implicit neural visual representation(s) the coefficient belongs to. In some examples, the indications may be provided for each layer of the implicit neural visual representations, rather than for each coefficient individually (i.e. each layer may be accompanied by an indication identifying which implicit neural visual representation(s) the layer belongs to). Changes to the coefficients (and/or, where included, architecture) over time in the video data may be described in the metadata in terms of the difference(s) with respect to one or more reference video frames.

Fig. 2 illustrates a method 200 for encoding immersive video, according to an embodiment of the invention. The method 200 may be used by the encoder 110 of Fig. 1 to generate the bitstream 115.

The method 200 begins at step 210, at which video data comprising a plurality of views of a scene is obtained. The video data may comprise a plurality of sequences of video frames, each sequence having been acquired by a camera having a different position and/or orientation.

At step 220, the video data is processed to generate one or more atlases. The generated one or more atlases include a plurality of texture patches, a plurality of depth patches and a plurality of neural regions, each neural region including depth information.

The video data may be processed to generate the one or more atlases by first selecting the plurality of neural regions in the video data; the remaining regions of the video may then be processed to produce the plurality of texture patches and the plurality of depth patches, and the texture patches, depth patches and neural regions may be packed into one or more atlases. In some examples, the plurality of neural regions in the one or more atlases may include each available view of the object(s) contained in the neural regions, while a pruning technique may be applied when processing the remaining regions, to reduce redundancies in the plurality of texture patches and the plurality of depth patches. In some examples, texture patches and depth patches may additionally be provided for the regions of video data that have been identified as neural regions.

The plurality of neural regions may correspond to regions of the video data having a view-dependent appearance, such as regions containing transparent/translucent surfaces and/or surfaces with non-Lambertian reflective properties, or regions containing objects having fine geometry. These are regions for which an implicit neural visual representation would be particularly advantageous when rendering an image frame of the scene from a target viewpoint. Each neural region may, in some examples, be defined such that the neural region is slightly larger than the region identified as containing a transparent/translucent surface, a surface with non-Lambertian reflective properties and/or fine geometry, in order to reduce a likelihood of any part of such objects/surfaces falling outside a neural region. For instance, the neural region may be 5-15% larger in area, or at least a predefined number of pixels wider in all directions (e.g. 8-16 pixels).

In some examples, the plurality of neural regions may be identified by processing a subset of the video data to generate an estimated view of the scene at a viewpoint included in the video data but not the subset. The estimated view of the scene may be compared to a video frame from the same viewpoint in the video data, and regions identified as containing differences based on the comparison may be selected to be represented by neural regions. Additionally or alternatively, the neural regions may be selected using one or more object detection algorithms: the one or more object detection algorithms may be applied to identify, if present, a position of one or more predefined objects in the video data, and regions containing the one or more predefined objects may be selected to be represented by neural regions. The one or more predefined objects may be objects that typically have fine geometry (e.g. trees, flowers, etc.), transparent/translucent surfaces (e.g. windows, vases, etc.) and/or surfaces with non-Lambertian reflective properties (e.g. mirrors, cars, etc.).

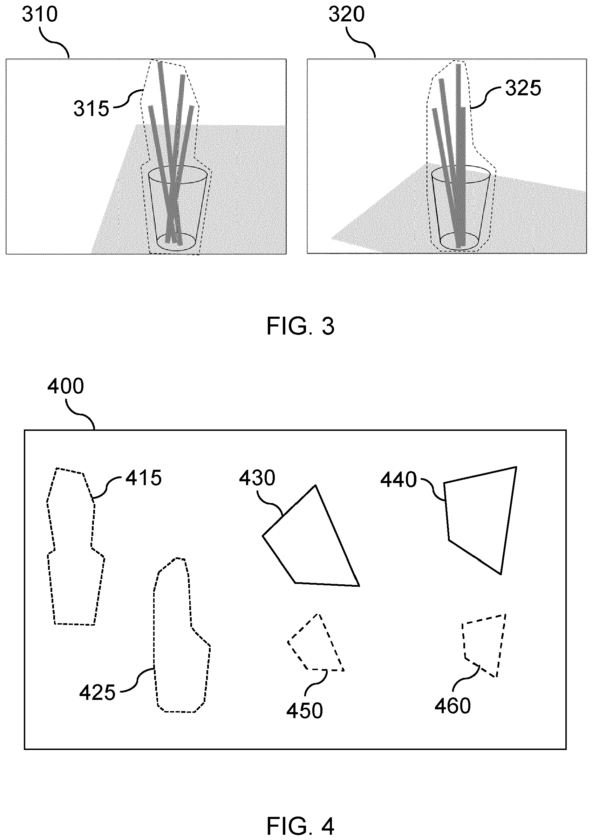

Fig. 3 illustrates an example of two source view frames 310, 320 of a scene. Region 315 of frame 310 and region 325 of frame 320 (each represented by a dotted outline) have been selected to be represented by neural regions. The regions 315 and 325 provide different views of the same object (a glass containing four straws). This object has both a transparent part (the glass) and fine geometry (the straws), and is therefore an object for which the use of an implicit neural visual representation is desired. The remaining regions of frames 310 and 320 do not contain any transparent/translucent or non-Lambertian surfaces nor any fine geometry, and may therefore be represented by texture and depth patches.

Fig. 4 illustrates a partially-filled atlas 400 generated based on the source view frames of Fig. 3. The atlas 400 includes neural regions 415 and 425 (each represented by a dotted outline), which in this example are patches of depth information for the regions 315 of frame 310 and 325 of frame 320 respectively. The atlas further includes a texture patch 430 for a region of frame 310 outside the region 315 and a texture patch 440 for a region of frame 320 outside the region 325 (each represented by a solid outline), as well as a depth patch 450 containing depth information for the region of frame 310 corresponding to the texture patch 430 and a depth patch 460 containing depth information for the region of frame 320 corresponding to the texture patch 440 (each represented by a dashed line).

In Fig. 4, the neural regions, texture patches, and depth patches are provided in a single atlas. In some examples, texture patches and depth patches may be arranged in an atlas such that a texture patch is provided in the same position in the atlas as a corresponding depth patch (i.e. an area of the atlas may contain both texture and depth information). As described above, the neural regions, texture patches and depth patches may alternatively be provided in different atlases. For illustrative purposes, large spaces have been left between the components of the atlas 400. However, the skilled person will readily appreciate that atlas components may be packed more closely together within an atlas frame.

Returning to Fig. 2, at step 230, one or more implicit neural visual representations, each of which has been trained using at least a subset of the neural regions, are obtained. Where the neural regions are patches of video data, the one or more implicit neural visual representations are trained directly on the neural regions. Where other representations are used for the neural regions (e.g. where the neural regions are meshes), the neural regions define the regions of video data on which the one or more implicit neural visual representations are trained. The one or more implicit neural visual representations may be any neural network(s) in which visual information from the regions of the video data represented by the neural regions used in training is encoded in the neural network (e.g. neural radiance field models, occupancy networks, neural signed distance functions, etc.).

The one or more implicit neural visual representations may consist of a single implicit neural visual representation trained using all the neural regions. Alternatively, the one or more implicit neural visual representations may comprise a plurality of implicit neural visual representations, each trained using a different subset of the neural regions, in order to improve an efficiency of training and rendering. For instance, the one or more implicit neural visual representations may comprise an implicit neural visual representation for each of the neural regions or for each object of the scene represented by one or more neural regions (i.e. the implicit neural visual representation for an object may be trained using all the neural regions containing the object; for example, the neural regions 415 and 425 of atlas 400 may be used to train an implicit neural visual representation for the glass containing four straws).

In some examples, the step of obtaining the one or more implicit neural visual representations may comprise a substep of training the one or more implicit neural visual representations. Alternatively, the step of obtaining the one or more implicit neural visual representations may consist of receiving one or more already-trained implicit neural visual representations. Methods for training the one or more implicit neural visual representations will depend on the type of implicit neural visual representation, and suitable methods for a particular implicit neural visual representation will be apparent to the skilled person.

As previously mentioned, in some examples, the regions of video data that have been identified as neural regions may also be represented by texture patches and depth patches. In these examples, the one or more implicit neural visual representations may be trained to model view-dependent effects (particularly non-Lambertian effects) in the neural regions as residuals defining the differences from a base texture of the regions (i.e. the texture provided by the texture patches corresponding to the neural regions). For instance, the one or more implicit neural visual representations may be trained to output a residual color for a point or ray in the scene for a particular view direction.

At step 240, metadata associated with the one or more atlases is generated. The metadata includes coefficients of the one or more implicit neural visual representations. The metadata may include additional information, as described above with reference to the bitstream 115 of Fig. 1.

At step 250, the one or more atlases and the metadata are encoded into a bitstream. In some examples, the one or more atlases may be encoded into one or more video sub-bitstreams and the metadata may be encoded into a metadata sub-bitstream; the sub-bitstreams may then be multiplexed to form the bitstream. The one or more atlases and the metadata may be encoded using any suitable codec.

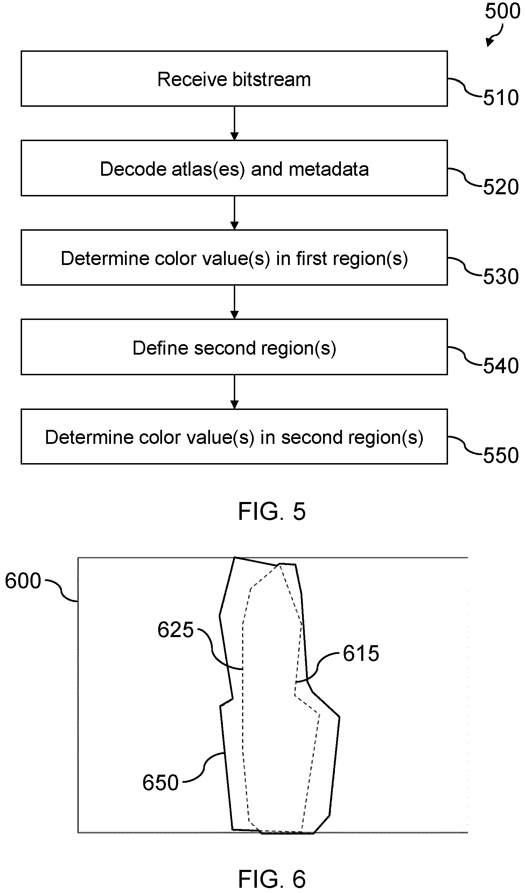

Fig. 5 illustrates a method 500 for decoding immersive video, according to an embodiment of the invention. The method 500 may be used by the decoder 120 of Fig. 1 to decode the bitstream 115.

The method 500 begins at step 510, at which a bitstream (such as the bitstream 115 of Fig. 1) is received. The bitstream comprises one or more encoded atlases and encoded metadata. The one or more encoded atlases include a plurality of texture patches of video data comprising a plurality of views of a scene, a plurality of depth patches for the video data and a plurality of neural regions for the video data. Each neural region in the one or more encoded atlases includes depth information. The encoded metadata includes one or more implicit neural visual representations that have been trained using at least a subset of the neural regions.

At step 520, the one or more atlases and the metadata are decoded. The one or more atlases may be decoded using any suitable codec.

In some examples, the received bitstream may include an indication of a maximum number of neural rays to be computed for a given viewport resolution and/or an indication of a maximum total number of evaluations to be performed by the one or more implicit neural visual representations for a given viewport resolution. If either or both of these indications is provided in the bitstream, a decoder performing the method 500 may continue with the method 500 only in response to a determination that the decoder is capable of computing the maximum number of neural rays and/or performing the maximum total number of evaluations.

Having decoded the one or more atlases and the metadata, the one or more atlases and the metadata are used to render an image frame of the scene at a target viewpoint by performing steps 530, 540 and 550 of the method 500. Steps 530, 540 and 550 are not necessarily carried out in the order shown in Fig. 5. For instance, depending on the technique used to render the image frame, steps 540 and 550 may instead be performed prior to step 530; step 540 and/or step 550 may be performed concurrently with step 530; or substeps of steps 540 and 550 may be interleaved with substeps of step 550.

At step 530, the plurality of texture patches and the plurality of depth patches are processed to determine a pixel value for each pixel in one or more first regions of the image frame at the target viewpoint. The determined pixel values may be color values for the pixels. In some examples, the pixel values may include transparency. The use of texture patches and depth patches to determine a pixel value for a pixel is well known, and suitable techniques, such as warping each texture patch to the target viewpoint using the corresponding depth patch, will be readily apparent to the skilled person.

The one or more first regions are regions of the image frame corresponding to regions of the scene represented by the texture patches and depth patches. In other words, the one or more first regions consist of the pixels of the image frame for which a pixel value may be determined using the texture patches and depth patches.

At step 540, the depth information for each neural region is processed to define a position of one or more second regions in the image frame. For instance, the one or more second regions may be defined by using the depth information to warp the neural regions to the target viewpoint. In this way, each of the one or more second regions in the image frame is associated with one or more of the neural regions. Depending on the target viewpoint, there may be an overlap between the one or more first regions and the one or more second regions (i.e. some areas of the image frame may be in both a first region and a second region), due, for example, to regions of the scene that are represented by texture and depth patches occluding, in the target viewpoint, regions of the scene that are represented by neural regions (or vice versa).

Fig. 6 illustrates an image frame 600 in which the scene illustrated in the source view frames 310 and 320 of Fig. 3 is being rendered. Region 615 (represented by a dotted outline) has been defined by warping the neural region 415 of Fig. 4 to the target viewpoint of the image frame 600, while region 625 (again represented by a dotted outline) has been defined by warping the neural region 425 of Fig. 4 to the target viewpoint of the image frame 600. The overall region 650 formed by regions 415 and 425 is therefore defined as a second region of the image frame 600. The second region 650 is associated with the neural regions 415 and 425 of Fig. 4.

Returning to Fig. 5, at step 550, the one or more implicit neural visual representations defined in the metadata are used to determine a pixel value for at least a subset of pixels in the one or more second regions. If more than one implicit neural visual representation is defined in the metadata, the pixel values of pixels in a given second region of the image frame are determined using the implicit neural visual representation(s) trained using the neural region(s) associated with the second region of the image frame. If more than one implicit neural visual representation is used to determine the pixel value of a pixel (e.g. in the case of overlapping objects where a different implicit neural visual representation has been trained for each object), an initial pixel value may be determined using each of the implicit neural visual representations; the initial pixel values may then be blended to determine the pixel value for the pixel (e.g. blended with weighting according to depth, or based on a confidence value for each initial pixel value).

Techniques for determining the pixel values for pixels using the one or more implicit neural visual representations will depend on the type of implicit neural visual representation(s) defined in the metadata.

For instance, in some examples, each of the one or more implicit neural visual representations may be a neural light field rendering model; that is, an implicit neural visual representation that is configured to directly output a pixel value for a given pixel (i.e. without an explicit step of ray sampling). In other examples, the one or more implicit neural visual representations may be one or more neural volume rendering models (e.g. one or more neural radiance field models). Neural volume rendering models output a color and density for a point in the scene (i.e. a point in 3D space). The pixel value for a pixel may therefore be determined using a neural volume rendering model by defining a sampling ray for the pixel, defining a set of sampling points along the sampling ray, using the neural volume rendering model to generate a color and density for each sampling point in the set of sampling points, and processing the colors and densities to determine the pixel value for the pixel.

In some examples, the depth information for the neural regions may be used to define the set of sampling points, in order to reduce the number of sampling points, thus further reducing rendering complexity. In other words, the sampling points for a pixel in a second region may be selected based on the depth(s) of the neural region(s) associated with the second region. In some examples, the metadata of the bitstream may specify how to use the depth information to define the set of sampling points. For instance, the metadata may define a depth variance around the mean and a number of sampling points to be selected from a given distribution (e.g. Gaussian, uniform, etc.).

As previously mentioned, in some examples, substeps of steps 540 and 550 may be interleaved with substeps of step 550. For instance, the one or more first regions and the one or more second regions may first be defined, and a region depth (i.e. a depth, relative to a virtual camera at the target viewpoint, for a scene region represented by the first/second region) may be determined for each of the one or more first regions and each of the one or more second regions. The pixel values of the pixels in the image frame may then be determined in order of region depth, starting with the smallest depth (i.e. a smallest distance from the virtual camera at the target viewpoint). In other words, a front-to-back strategy may be used to render the image frame, in which the pixel values of pixels belonging to a closest scene region are rendered first, followed by the pixel values of pixels belonging to a second-closest scene region, and so on. When rendering scene regions other than the closest scene region, pixel values may be determined only for pixels for which a pixel value has not already been determined, or only for pixels for which a pixel value has not already been determined and pixels for which a previously-determined value is at least partially transparent. This technique reduces waste of computational resources, by not using an implicit neural visual representation to determine the pixel value of a pixel in a second region if the scene region represented by the second region is occluded by a scene region represented by a first region at the target viewpoint.

In other examples, for each pixel of the image frame, a determination may be made as to whether the pixel value of the pixel is to be determined using texture and depth patches or using an implicit neural visual representation. This again avoids using an implicit neural visual representation to determine a pixel value that is not used in the image frame.

For example, an indicator map may be generated, with each pixel of the indicator map corresponding to a pixel of the image frame. Pixels of the indicator map may have a first color if it is determined that the pixel value of the corresponding pixel of the image frame is to be determined using texture and depth patches and a second color if it is determined that the pixel value of the corresponding pixel is to be determined using an implicit neural visual representation. The pixel value of each pixel of the image frame may then be determined according to the method indicated by the color of the corresponding pixel in the indicator map.

In some examples, rather than generating a separate indicator map, the pixel values for each pixel in the one or more first regions may first be determined using the texture and depth patches, and then the one or more implicit neural visual representations may be used to determine the pixel values for the remaining pixels. In other words, step 530 may be performed prior to performing step 550. In some examples, this technique may be carried out at tile-level; that is, the pixel values for each pixel in the one or more first regions within a tile of the image frame are determined using the texture and depth patches before using an implicit neural visual representation to determine the pixel value for any remaining pixels in the tile. The determination of pixel values for pixels in first regions may then be carried out in a subsequent tile while determining the pixel values for the remaining pixels in a tile for which the first region(s) have already been rendered.

In other examples, step 530 may be performed in parallel with steps 540 and 550. In other words, the pixel values for the pixels in the one or more first regions are determined independently from the pixel values for the pixels in the one or more second regions. For instance, the one or more first regions and the one or more second regions may be rendered into separate frame buffers. The separate frames for the first regions and the second regions may then be composited to generate an overall image frame of the scene at the target viewpoint.

For each pixel belonging to both a first region and a second region, this technique results in two pixel values being determined for the pixel. The final pixel value for the pixel may be determined by processing the determined pixel values for the pixel. For instance, depth information from the neural region(s) associated with the second region to which the pixel belongs may be compared with the depth patch(es) associated with the first region to determine whether to use the pixel value determined using texture and depth patches or the pixel value determined using an implicit neural visual representation (e.g. if the object(s) in the scene represented by the relevant neural region(s) is/are closer to a virtual camera at the target viewpoint than the object(s) in the scene represented by the relevant depth patch(es), the pixel value determined using the implicit neural visual representation is used). In some examples (e.g. where the 'closer' pixel value is at least partially transparent), the two pixel values for the pixel may be blended to determine the final pixel value for the pixel.

This technique allows the first and second regions to be rendered simultaneously; however, it can result in discarding some of the pixel values that have been determined using the one or more implicit neural visual representations (i.e. for pixels where a second region is occluded by a first region).

In some examples, having defined the pixel values for the pixels in the image frame, the method 500 may further comprise a step of blending at boundaries between a first region and a second region, in order to reduce differences in appearance between the first region(s) and second region(s) in the image frame. Blending techniques are well known in image processing, and suitable blending techniques for a given type of neural region will be apparent to the skilled person. In some examples, the metadata of the bitstream may include an indication of how to blend pixels at the boundaries between a first region and a second region. For instance, where only color information is available, the colors may be averaged; where color and depth information is available, the nearest color may be used (or the colors may be blended giving higher weighting to the nearer color); where color and confidence information is available, the color with the highest confidence may be used (or the colors may be blended giving higher weighting to the color with higher confidence). Soft decisions may be used to reduce the visibility of edges.

In some examples, the regions of the scene represented by neural regions may also be represented by texture patches and depth patches, and the one or more implicit neural visual representations may be trained to model view-dependent effects in the neural regions. In these examples, the one or more first regions may cover the entire image frame, such that a non-view-dependent image frame at the target viewpoint may be fully rendered using the texture and depth patches. The one or more implicit neural visual representations may then be used to add view-dependent effects to the non-view-dependent image frame.

In some examples, the received bitstream may include viewing space information, as defined above. The image frame at the target viewpoint may be rendered as described above for target viewpoints defined by the viewing space information; for other target viewpoints, a rendering strategy that reduces rendering complexity may be employed. For instance, an image frame at a target viewpoint not defined in the viewing space information may be rendered at a lower resolution, or the number of evaluations performed by the one or more implicit neural visual representations may be limited by randomly selecting a certain number of rays within the one or more second regions of the image frame at the target viewpoint.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A bitstream (115) comprising:
one or more encoded atlases (400), wherein the one or more encoded atlases include a plurality of texture patches (430, 440) of video data comprising a plurality of views of a scene, a plurality of depth patches (450, 460) for the video data and a plurality of neural regions (415, 425) for the video data, wherein each neural region includes depth information; and
encoded metadata, wherein the metadata includes coefficients of one or more implicit neural visual representations trained using at least a subset of the neural regions.

2. The bitstream of claim 1, wherein the metadata further includes an indication of a maximum number of neural rays, for a given viewport resolution, to be computed when rendering an image frame of the scene using the bitstream.

3. The bitstream of claim 2, wherein the metadata further comprises viewing space information defining a viewing space for which the indication of a maximum number of neural rays applies.

4. The bitstream of any of claims 1 to 3, wherein:
the one or more implicit neural visual representations comprise a plurality of implicit neural visual representations; and
at least a portion of the coefficients in the metadata is shared between more than one implicit neural visual representation.

5. The bitstream of any of claims 1 to 4, wherein:
the plurality of texture patches and plurality of depth patches represent all regions of the scene represented in the video data; and
the one or more implicit neural visual representations defined in the metadata have been trained to model view-dependent effects for regions of the scene represented by the plurality of neural regions.

6. A method (200) for encoding immersive video, the method comprising:
obtaining video data comprising a plurality of views (310, 320) of a scene;
processing the video data to generate one or more atlases (400), wherein the one or more atlases include a plurality of texture patches (430, 440), a plurality of depth patches (450, 460) and a plurality of neural regions (415, 425), wherein each neural region includes depth information;
obtaining one or more implicit neural visual representations, wherein each of the one or more implicit neural visual representations has been trained using at least a subset of the neural regions;
generating metadata associated with the one or more atlases, wherein the metadata includes coefficients of the one or more implicit neural visual representations; and
encoding the one or more atlases and the metadata into a bitstream (115).

7. A method (500) for decoding immersive video, the method comprising:
receiving a bitstream (115) comprising:
one or more encoded atlases (400), wherein the one or more encoded atlases include a plurality of texture patches (430, 440) of video data comprising a plurality of views of a scene, a plurality of depth patches (450, 460) for the video data and a plurality of neural regions (415, 425) for the video data, wherein each neural region includes depth information; and
encoded metadata, wherein the metadata includes coefficients of one or more implicit neural visual representations trained using at least a subset of the neural regions;
decoding the one or more atlases and the metadata;
processing the plurality of texture patches and the plurality of depth patches to determine a pixel value for each pixel in one or more first regions of an image frame (600) at a target viewpoint;
processing the depth information for each neural region to define a position of one or more second regions (650) in the image frame; and
using the one or more implicit neural visual representations defined in the metadata to determine a pixel value for at least a subset of pixels in the one or more second regions.

8. The method (500) of claim 7, wherein:
the one or more implicit neural visual representations defined in the metadata comprise one or more neural volume rendering models; and
the step of using the one or more implicit neural visual representations defined in the metadata to determine a pixel value for at least a subset of pixels in the one or more second regions (650) comprises:
processing the depth information for the plurality of neural regions (415, 425) to define a set of sampling points for each pixel;
using the one or more neural volume rendering models to generate a color and density for each sampling point; and
for each pixel, processing the color and density for each sampling point in the set of sampling points for the pixel to determine the pixel value for the pixel.

9. The method (500) of claim 7 or 8, wherein:
the method further comprises determining a region depth for each of the one or more first regions and each of the one or more second regions (650); and
the pixel values of the pixels are determined in order of region depth, from smallest depth to greatest depth.

10. The method (500) of claim 7 or 8, wherein the step of processing the plurality of texture patches (430, 440) and the plurality of depth patches (450, 460) to determine a pixel value for each pixel in one or more first regions is performed prior to using the one or more implicit neural visual representations, and the one or more implicit neural visual representations are used only to determine the pixel value for any pixels in the one or more second regions (650) that do not overlap with a first region.

11. The method (500) of claim 7 or 8, wherein:
the pixel values for pixels in the one or more first regions and the pixel values for pixels in the one or more second regions (650) are determined independently from one another; and
the method further comprises, for each pixel belonging to both a first region and a second region, processing the determined pixel values for the pixel to generate a final pixel value.

12. The method (500) of any of claims 7 to 11, further comprising blending at one or more boundaries between a first region and a second region (650).

13. A computer program product comprising computer program code means which, when executed on a computing device having a processing system, cause the processing system to perform all of the steps of the method (200, 500) according to any of claims 6 to 12.

14. An encoder (110) configured to encode immersive video, the encoder being configured to:
obtain video data comprising a plurality of views (310, 320) of a scene;
process the video data to generate one or more atlases (400), wherein the one or more atlases include a plurality of texture patches (430, 440), a plurality of depth patches (450, 460) and a plurality of neural regions (415, 425), wherein each neural region includes depth information;
obtaining one or more implicit neural visual representations, wherein each of the one or more implicit neural visual representations has been trained using at least a subset of the neural regions;
generate metadata associated with the one or more atlases, wherein the metadata includes coefficients of the one or more implicit neural visual representations; and
encode the one or more atlases and the metadata into a bitstream (115).

15. A decoder (120) configured to decode immersive video, the decoder being configured to:
receive a bitstream (115) comprising:
one or more encoded atlases (400), wherein the one or more encoded atlases include a plurality of texture patches (430, 440) of video data comprising a plurality of views of a scene, a plurality of depth patches (450, 460) for the video data and a plurality of neural regions (415, 425) for the video data, wherein each neural region includes depth information; and
encoded metadata, wherein the metadata includes coefficients of one or more implicit neural visual representations trained using at least a subset of the neural regions;
decode the one or more atlases and the metadata;
process the plurality of texture patches and the plurality of depth patches to determine a pixel value for each pixel in one or more first regions of an image frame (600) at a target viewpoint;
process the depth information for each neural region to define a position of one or more second regions (650) in the image frame; and
use the one or more implicit neural visual representations defined in the metadata to determine a pixel value for at least a subset of pixels in the one or more second regions.
